# EUROPEAN PATENT APPLICATION

(11) **EP 4 807 419 A1**
(43) Date of publication of application: **16.09.2026**
(21) Application number: 25208935.4
(22) Date of filing: 15.10.2025
(51) Int. Cl.: G02B 6/44

(54) **OPTICAL FIBER CABLE**

(30) Priority: 11.03.2025 IN 202511021651
(71) Applicant: HFCL Limited, New Delhi 110048 (IN)
(72) Inventor: PANWAR, Sourabh Singh, 173213 Solan (IN); DAS, Jyoti Prakash, 173213 Solan (IN); POL, Manohar, 173213 Solan (IN)
(74) Representative: Office Freylinger

(57) **Abstract**

The present invention provides an optical fiber cable (100), comprising: a core (102) comprising a plurality of optical fibers (104); and an outer sheath (106) comprising a plurality of segments (108) and a plurality of protruding elements (110) located between adjacent segments (108). The width (wₚₑ) of a protruding element (110) is 4% to 20% of the width (wₛ) of a segment (108). The optical fiber cable (100) of the present invention has superior blowing performance during installation in a duct compared to conventional cables.

## Description

### TECHNICAL FIELD

The present invention generally relates to optical fiber cables. In particular, the present invention relates to an optical fiber cable with improved blow-installation performance.

### BACKGROUND OF THE INVENTION

This section is intended to provide information relating to the field of disclosure and thus, any approach or functionality described herein should not be assumed to qualify as prior art merely by its inclusion in this section.

Blow installation is a process for installing cables (such as optical fiber cables) in ducts. The blow installation process offers advantages over conventional pulling of cables, particularly over long distances. The blow installation process is quicker and is less damaging to the cable.

The speed and blowing distance of a cable is affected by parameters such as weight of the cable, size of the cable flexibility of the cable, duct fill ratio of the cable in the duct and a coefficient of friction between the outermost layer of the cable and the walls of the duct. For any particular application, weight, size, and flexibility are generally fixed. Thus, coefficient of friction becomes a vital parameter that limits the blowing distance and speed of the cable.

Cables are generally provided with an outer sheath that conform to the geometry of the inner sections of the cable, and that is typically circular. The outer sheath forms the points of contact between the cable and the walls of the duct. The outer sheath is generally made of a material that is strong and durable; however, as a result, the outer sheath typically ha a higher co-efficient of friction with the walls of the duct, resulting in poor blowing performance of the cable.

Some outer sheaths are made of materials that have a smoother finish; however, the blowing performance is still not significantly improved.

There is, therefore, a requirement in the art for an optical fiber cable that can exhibit improved blow-installation performance.

### SUMMARY OF THE INVENTION

This section is intended to introduce one or more aspects and/or embodiments of the present disclosure in a simplified form and is not intended to identify any key advantages or features of the present disclosure.

In an aspect of the present invention, there is provided an optical fiber cable comprising: a core, said core comprising a plurality of optical fibers; and at least a layer surrounding the core, said layer comprising an outer sheath, wherein the outer sheath surface comprises a plurality of segments, characterized in that the outer sheath comprises a plurality of protruding elements, wherein at least a protruding element is located between adjacent segments, and wherein the width of each of the plurality of protruding elements is in a range of 4% to 20% of the width of a segment.

In an aspect of the present invention, the cross-sectional profile of the plurality of segments is selected from the group consisting of convex, concave, and flat.

In an aspect of the present invention, the cross-sectional profile of plurality of protruding elements is selected from the group consisting of semi-circle, oval, Reuleaux polygon, and polygon with rounded corners.

In an aspect of the present invention, the outer surface of said outer sheath comprises 6 to 16 segments.

In an aspect of the present invention, the optical fiber cable comprises one or more strength members embedded in the outer sheath, wherein where the optical fiber cable comprises 2 strength members, the strength members are not diametrically opposite each other, and where the optical fiber cable comprises 3 or more strength members, the 3 or more strength members are placed equidistant from each other, and no two strength members are diametrically opposite each other.

In an aspect of the present invention, the number of strength members embedded in the outer sheath is less than or equal to the number of segments.

In an aspect of the present invention, the core comprises at least one subunit comprising a plurality of intermittently bonded ribbons (IBRs).

In an aspect of the present invention, the material for the segments and the protruding elements is identical.

### BRIEF DESCRIPTION OF THE ACCOMPANYING DRAWINGS

The present disclosure, both as to its organization and manner of operation, together with further objects and advantages, may best be understood by reference to the description, taken in connection with the accompanying drawings. These and other details of the present disclosure will be described in connection with the accompanying drawings, which are furnished only by way of illustration and not in limitation of the scope of the present disclosure.
FIG. 1A illustrates a schematic perspective view of an optical fiber cable, according to an embodiment of the present invention;
FIG. 1B illustrates a schematic sectional view of the optical fiber cable of FIG. 1A, according to an embodiment of the present invention;
FIG. 1C illustrates a schematic sectional close-up view of a portion of the optical fiber cable of FIG. 1B, according to an embodiment of the present invention; and
FIG. 2 illustrates a schematic representation of the blowing track to assess the blow-installation performance of the optical fiber cable, according to an embodiment of the present invention.

### DETAILED DESCRIPTION OF THE INVENTION

In the following description, for the purposes of explanation, various specific details are set forth in order to provide a thorough understanding of one or more embodiments of the present disclosure. It will be apparent, however, that embodiments of the present disclosure may be practiced without these specific details. Several features described hereafter may each be used independently of one another or in any combination with other features. An individual feature may not address any of the problems discussed above or may address only some of the problems discussed above. Some of the problems discussed above may not be fully addressed by any of the features described herein.

The present invention provides an optical fiber cable. The optical fiber cable comprises a core, whereby the core comprises a plurality of optical fibers. The optical fiber cable further comprises at least a layer surrounding the core. In an embodiment, the layer surrounding the core is a single layer, which is an outer sheath. The outer sheath surface comprises a plurality of segments. The outer sheath comprises a plurality of protruding elements. A protruding element is located between adjacent segments. The width of each of the plurality of protruding elements is in the range of 4% to 20% of the width of a segment.

In an embodiment, each optical fiber comprises a central light transmitting region, and a cladding surrounding the central light transmitting region. The refractive index of the cladding is different from that of the central light transmitting region, and the cladding serves to confine light signals to within the central light transmitting region. The central light transmitting region is typically made of an optically conductive material, such as, without limitations, glass, silica, quartz, plastic, and ceramic. In some implementations, the central light transmitting region and the surrounding cladding are further coated with one or more primary layers made of polymeric, organic, and/or inorganic materials in order to provide mechanical and environmental protection to the central light transmitting region. In some other implementations, one or more secondary layers may be provided surrounding the one or more primary layers for providing mechanical support to the central light transmitting region. In an embodiment, the one or more primary and/or secondary layers is coloured. The one or more primary and/or secondary layers surrounding the central light transmitting region and the cladding may not affect the capacity of the optical fiber to transmit light signals. In an embodiment, the plurality of optical fibers comprises single-core fibers, multi-core fibers, or a combination thereof. In an embodiment, the plurality of optical fibers are single-mode optical fibers. In another embodiment, the plurality of optical fibers are multi-mode optical fibers. In an embodiment, the plurality of optical fibers is compliant with ITU-T standards. It is understood by a person skilled in the art that the cross-section dimension(s) of the optical fibers described herein are not a limiting feature of the present invention and are generally known in the art. For example, in a non-limiting manner, the cladding diameter of the optical fiber can be 125±0.7µm; the outer diameter of the optical fiber can be in the range of 160-250µm.

In an embodiment, the plurality of optical fibers comprises at least one of loose optical fibers, bundled or twisted optical fiber, or optical fiber ribbons. In a preferred embodiment, the plurality of optical fibers is in the form of one or more ribbons. In another embodiment, the one or more optical ribbons are intermittently bonded ribbons (IBRs), rollable ribbons, flat ribbons, ribbon stack or any combination thereof. In a preferred embodiment, the ribbons are IBRs. In an embodiment, the optical fiber cable core comprises a plurality of IBRs. In an embodiment, the number of optical fibers is the plurality of IBRs is the same. In an embodiment, the number of optical fibers in at least a first IBR of the plurality of IBRs is different.

In an embodiment, the plurality of IBRs is bundled into one or more modules. In an embodiment, the number of IBRs in each of the plurality of modules is the same. In an embodiment, the number of IBRs in at least a first module of the plurality of modules is different. In an embodiment, the number of optical fibers in the plurality of modules is the same. In an embodiment, the number of optical fibers in a first module of the plurality of modules is different.

In an embodiment, the plurality of optical fibers is stranded. In an embodiment, the stranding is in SZ manner. In another embodiment, the stranding is along one direction. In another embodiment, the plurality of optical fibers is unstranded. In yet another embodiment, the plurality of optical fibers comprises both stranded and unstranded optical fibers. It will be appreciated by a person skilled in the art that the optical fibers of the present invention are illustrative, and not a limiting or an essential feature of the present invention. The person skilled in the art will also appreciate that the features of the disclosed optical fibers are not limiting to the scope of the present invention, and that the present invention may encompass other optical fibers known in the art, as required by different application attributes for the optical fiber cable.

In an embodiment, the optical fiber cable comprises at least 6, at least 12, at least 24, at least 36, at least 48, at least 96, or at least 144 optical fibers. In yet another embodiment, the optical fiber cable comprises up to 3456 optical fibers. In an exemplary implementation, the optical fiber cable comprises 144 to 3456 optical fibers.

The outer sheath of the optical fiber cable surrounds and encapsulates the core of the optical fiber cable. In an embodiment, the protruding elements extend along in the longitudinal direction of the body of the optical fiber cable.

In an embodiment, the cross-sectional profile of the optical fiber cable depicts the plurality of segments. In an embodiment, the cross-sectional profile of the outer sheath corresponds generally to a polygonal geometry comprising 'n' number of segments or sides. In an embodiment, 'n' ranges from 6 to 16. In an embodiment, the cross-sectional profile of the segments is selected from the group consisting of convex, concave, and flat. In an embodiment, the cross-sectional profile of all the segments is substantially the same. In another embodiment, the cross-sectional profile of at least one of the segments is different.

In an embodiment, the protruding elements are formed at the intersection of any two adjacent segments of the outer sheath of the optical fiber cable. In an embodiment, the cross-sectional profile of the protruding elements is rounded profile or bevelled profile. In an embodiment, the cross-sectional profile of the protruding elements is selected from the group consisting of semi-circle, oval, Reuleaux polygon, and polygon with rounded corners. In an embodiment, the cross-sectional profile of all the protruding elements is substantially the same. In another embodiment, the cross-sectional profile of at least one of the protruding elements is different. In a preferred embodiment, the cross-sectional profile of the protruding elements is a Reuleaux triangle.

In an embodiment, the cross-sectional profile of the outer sheath corresponds to a Reuleaux polygon. In an embodiment, the width of each of the plurality of protruding elements is in the range of 4% to 20% of the width of a segment. More preferably, the width of each of the plurality of protruding elements is in the range of 6% to 12%. If the width of the protrusion is more than 20%, the face length of the side is reduced which leaves less surface area for air drag and reduces blowing performance. If the width of the protrusion is less than 4%, the cable's outer shape becomes near circular and again the blowing performance is reduced. In an embodiment, the total sum of width of each of the plurality of protruding elements is in the range of 4% to 20% of total sum of width of each of the plurality of segments. In a preferred embodiment, the width of all the protruding elements is substantially the same, and the width of all the segments is substantially the same. Further, in a preferred embodiment, the angular separation of each of the protruding elements relative to an adjacent protruding element is substantially the same. In an embodiment, the height of the protruding elements is substantially the same as the width of the protruding elements.

In an embodiment, the width of plurality of protruding elements may vary within a specified limit. For example, the width (wₚₑ) of one protruding element among plurality of protruding elements can vary maximum via 25%. In another embodiment, the width of plurality of segments (wₛ) may vary within a specified limit. In a non-limiting example, the width (wₛ) of one segment among plurality of segments can very maximum via 10%. In embodiment, wherein the plurality of segments and plurality of protruding elements have different width, the ratio of overall width of protruding elements to the overall width of segments lies in the range of 4% to 20%. This ratio can be derived by calculating the average width of all the protruding elements and average width of all the segments.

In an embodiment, the protruding elements and the segments of the outer sheath form a continuous structure. In an embodiment, the outer sheath is formed during an extrusion process. In an embodiment, the outer sheath is made of a polymeric material, selected from the group consisting of high-density polyethylene (HDPE), low-density polyethylene (LDPE), medium-density polyethylene (MDPE), linear low-density polyethylene (LLDPE), polyamide, polypropylene, polyurethane, polyolefin, and halogen-free flame-retardant (HFFR) materials. In a preferred embodiment, the material for the segments and protruding elements is substantially the same.

In an embodiment, the optical fiber cable comprises one or more strength members embedded in the outer sheath. In an embodiment, the optical fiber cable comprises a single strength member. In an embodiment, the optical fiber cable comprises two strength members where the two strength members are not located diametrically opposite each other. In an embodiment, the optical fiber cable comprises 3 or more strength members where each of the 3 or more strength members are located equidistant from each other circumferentially, and no two strength members are located diametrically opposite each other.

In an embodiment, the number of strength members embedded in the outer sheath is equal to the number of segments. In an embodiment, the number of strength members embedded in the outer sheath is less than the number of segments. In an embodiment, the strength members are made of at least one of fiberglass-reinforced plastic (FRP), aramid reinforced plastic (ARP), aramid yarn, plastic, or steel. In a preferred embodiment, the strength members are made of ARP.

In an embodiment, the optical fiber cable further comprises one or more inner layers located between the core and the outer sheath. In an embodiment, the one or more inner layers comprises a water-blocking layer. The water-blocking layer comprises water-blocking elements selected from the group consisting of water-swellable tape, water-swellable yarn, water-blocking fibers, water-blocking powders, water-blocking gel, and combinations thereof.

In an embodiment, the one or more inner layers comprises a dielectric layer, comprising insulating materials selected from the group consisting of FRP, ARP, IGFR, aramid yarn, polyvinylidene fluoride (PVDF), polyether-ether ketone (PEEK), polyvinyl chloride (PVC), flame-retardant polyethylene (FRPE), chlorinated polyvinyl chloride (CPVC), polytetrafluoroethylene (PTFE), Fiber-Reinforced Polymer (FRP), acrylonitrile butadiene styrene (ABS), low-smoke zero-halogen (LSZH) material, polybutylene terephthalate (PBT), polycarbonate (PC), polyethylene (PE), polypropylene (PP), polyethylene terephthalate (PET), and combinations thereof.

In an embodiment, the one or more inner layers is an armor layer. The armor layer can be made of metal or polyethylene. In an embodiment, the material of the armor layer can include aluminium, stainless steel, or Kevlar.

In an embodiment, the optical fiber cable further comprises at least one or more secondary strength members located within the core of the optical fiber cable.

It will be appreciated by persons skilled in the art that the optical fiber cable can comprise additional layers and components that are not disclosed herein, but are however known in the art; such features are well within the gamut of disclosure of the present invention, but do not form an essential or limiting feature of the present invention.

The particular features of the outer sheath allow for faster and longer blowing distance of the optical fiber cable within a duct. During blowing, the protruding elements, being external, relative to the segments of the outer sheath of the optical fiber cable, form points of contact with the walls of the duct, as a result, the effective friction between the walls of the duct and the outermost surface (i.e., the protruding elements) of the optical fiber cable is low, allowing for easier and less hindered movement of the optical fiber cable relative to the walls of the duct. Further, the since the width of the protruding elements is significantly less as compared to the width of the segments, the protruding elements offer low aerodynamic resistance to the pressurized air used for installation of the optical fiber cable within the duct. Furthermore, the small cross-sectional area of the protruding elements also allows for greater contact area for the pressurized air with the segments, contributing to smoother and faster deployment of the optical fiber cable within the duct. Further still, the polygonal cross-section of the outer sheath improves the duct-fill ratio, which is defined as a fraction of the cross-sectional area of the duct occupied by the optical fiber cable. The optical fiber cable of the present invention has a lower duct fill ratio relative to conventionally used circular cables. The reduced duct fill ratio also allows for greater interaction of the pressurized air with the segments. Due to the limited area of contact between the optical fiber cable and the duct wall (limited to the protruding elements), the chances for any damage to the segments of the outer sheath due to frictional forces is greatly mitigated, thereby improving the operational lifetime of the optical fiber cable.

In a preferred embodiment, the outer sheath is made of HDPE, which has a high strength to weight ratio, enabling the outer sheath to have a lower thickness while still having the required durability. Further, HDPE has a low moisture absorption rate. As a result, the outer sheath can be used in locations with high ambient moisture without compromising the structure of the outer sheath and without allowing ingress of moisture therethrough. Further, HDPE has a very low brittleness temperature and thus, the outer sheath can be used in locations where the ambient temperature is very low, without causing brittleness and cracking of the outer sheath. HDPE also has a high resistivity to ultraviolet radiation, and thus the outer sheath can be used in regions of high sunlight exposure without causing the structure of the outer sheath to be compromised. The outer sheath made of HDPE may thus be suitable for use in outdoor application. HDPE also has a high dielectric constant, thus providing the outer sheath with good electrical insulation property. As a result, the outer sheath made of HDPE is suitable for use in high power applications.

In an embodiment, the weight of the optical fiber cable of the present invention is in the range of 105±10kg/km. In an embodiment, the outer diameter of the optical fiber cable of the present invention is 12.5±0.3mm.

In an exemplary embodiment, there is provided an optical fiber cable comprising a core, wherein the core comprises 432 optical fibers. The bundles are encapsulated by an outer sheath made of HDPE, whereby the thickness of the outer sheath layer is 4.3mm and the outer diameter of the optical fiber cable is 12.5mm. The outer sheath has seven strength members embedded, whereby the strength members are made of ARP having diameter of 0.5mm and are placed equidistant from each other circumferentially, and no two strength members are diametrically opposite each other. The width and height of the protruding elements is 0.25mm. The outer sheath has 10 segments, each of which are substantially curved faces, and the width of each of the segments of the outer sheath is 4±0.5mm. The width of the protruding element is approximately 10% of the width of each segment of the outer sheath, i.e. 0.4±0.05mm.

Example embodiments of the present invention are described below, as illustrated in various drawings, in which the same reference numerals refer to the same parts throughout the different drawings.

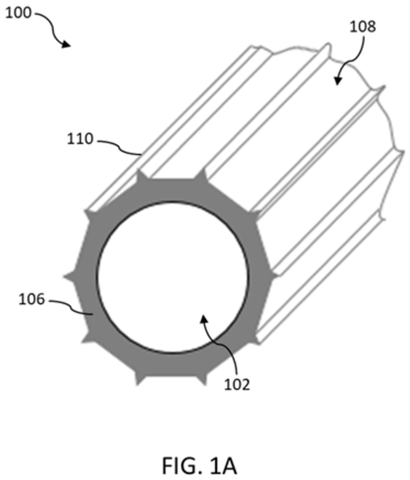

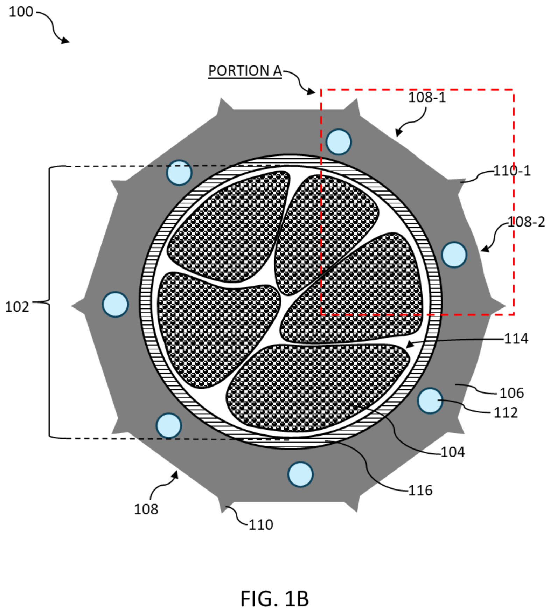

FIGs. 1A and 1B illustrate schematic perspective and sectional views, respectively, of an optical fiber cable 100, according to an embodiment of the present invention.

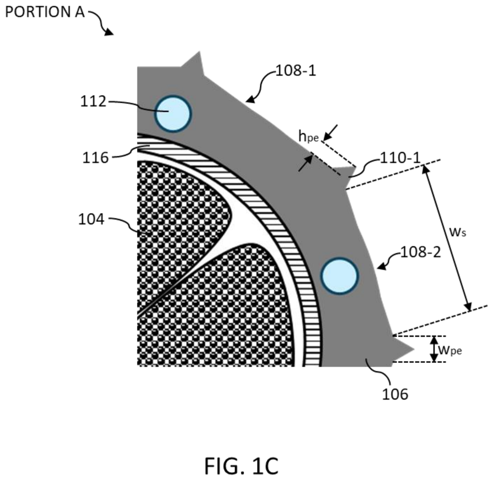

FIG. 1C illustrates a schematic sectional close-up view of a portion (Portion A) of the optical fiber cable 100, according to an embodiment of the present invention.

Referring to FIG. 1A, there is provided an optical fiber cable 100 comprising a core 102 encapsulated by an outer sheath 106. The core 102 comprises a plurality of optical fibers 104 (not shown). The outer sheath 106 surface comprises a plurality (ten) of segments 108 and a plurality (ten) of protruding elements 110. The width (wₚₑ) of each of the plurality of protruding elements 110 is in the range of 4% to 20% of he width (wₛ) of a segment 108.

Referring to FIG. 1B and 1C, a protruding element 110-1 is located between adjacent segments 108-1 and 108-2. The core 102 of the optical fiber cable 100 comprises a plurality of modules 114, whereby each module 114 comprises a plurality of IBRs, each IBR comprising a plurality of optical fibers 104.

The width (wₚₑ) of all the protruding elements 110 are substantially the same, and the width (wₛ) of all the segments 108 is also substantially the same. Further, the angular separation of each of the protruding elements 110 relative to an adjacent protruding element 110 is substantially the same. The height (hₚₑ) of the protruding elements 110 is substantially the same as the width (wₚₑ) of the protruding elements 110.

The optical fiber cable 100 comprises seven (7) strength members 112 embedded in the outer sheath 106. Each of the seven strength members 112 are placed equidistant from each other circumferentially. Further, none of the seven strength members 112 are embedded diametrically opposite to each other.

The optical fiber cable 100 further comprises one or more inner layers 116 located between the core 102 and the outer sheath 106, which can be at least one of water-blocking layer, dielectric layer, or a combination thereof.

### EXAMPLES

In order to illustrate the exemplary blow-installation performance of the optical fiber cable 100 of the present invention, a comparative performance of the optical fiber cable 100 of the present invention (designated "Sample A") against conventional optical fiber cable (designated "Sample B"). The features of the optical fiber cable of Sample A, and Sample B is provided below:
▪ Outer diameter of the optical fiber cable = 12.5 mm
▪ Inner Diameter (of the outer sheath) = 8.2 mm
▪ Material of the outer sheath = HDPE
▪ Strength Members - 7, having diameter of 0.5 mm, made of ARP, placed equidistantly.
▪ Optical fibers - 432 optical fibers having diameter of 250µm, bundled into ribbons.
▪ In Sample A, wₚₑ and hₚₑ = 0.25 mm; 10 segments; width of each segment = 4±0.5mm; width of protruding element = 0.4±0.05mm.
▪ In Sample B, the outer sheath has a smooth surface and a circular cross-sectional profile.

To assess the blow-installation performance, Samples A, and B were blow-installed in a duct having an inner diameter of 20 mm, using an air pressure of 12 bar. The Samples A, and B were blow-installed at a maximum blowing speed of 60 m/min. Both the samples were blown for a distance of 1966m (~2km). The INTELLIJET-P02 blowing machine was used for all the blowing trials along with Kesear Ask 28 compressor and Micro Jetting lube which reduces the coefficient of the friction between the cable outer sheath and the duct wall.

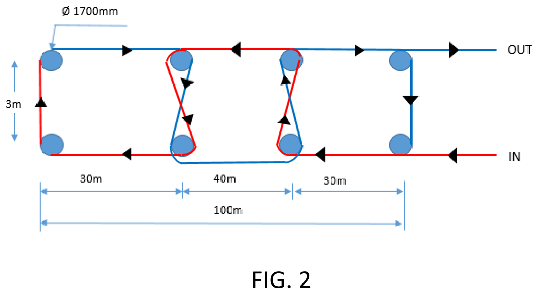

As shown in Fig 2, the test track follows a rectangular pathway with an input and output section of the duct. It features straight paths and number of SZ twists (Zig-Zag twist) in between and the distance between the two parallel pathways is 3 meter. The total length of one loop is 100 meter divided into 30 meter of straight track at the beginning, 40 meter of middle section containing one S and one Z twist followed by a 30 meter of a straight track. The same pattern repeats after the two 90° turns 3 meter apart from each other. The radius of curvature of the all twists and turns is 0.85 meter. Total length of track between the Input and output ends is 2000 meters and consists of 10 such kind of loops mentioned above.

As seen in Table 1 below, it can be seen that the cable of Sample A (cable as per present invention) was blown 1966m in 34.36 mins, while the cable of Sample B was blown 1966m in 38.3 mins. The cable of Sample A (present invention) took 10.28% less time than the cable of Sample B (comparative) to be blown the same distance of 1966m.

**Table 1**

| **Parameter** | **Sample A** | **Sample B** |
|---|---|---|
| Blown distance | 1966m | 1966m |
| Time | 34.36min | 38.3min |

This data clearly show that the blowing efficiency (time taken) of the cable as per the present invention (Sample A) is significantly superior (less time taken) as it can be blown quicker over the same distance, which effectively reduces installation time.

Next, the last concluding speed of the cable of Sample A and Sample B was determined. Last concluding speed is the blowing speed of the cables at the end of their respective blowing distances. The blowing test was conducted at a starting speed of 60 m/min for a distance of 1966m and the blowing was stopped if the blowing speed drops below 20m/min.

**Table 2**

| **Parameter** | **Sample A** | **Sample B** |
|---|---|---|
| Blown distance | 1966m | 1966m |
| Last speed | 36.8m/min | 24m/min |

As shown in Table 2, the last concluding speed of the cable of Sample A (as per present invention) was 36.8m/min, while the cable of sample B concluded with last speed of 24m/min. Thus, the cable of sample A shows a 53.3% increase as compared to the cable of Sample B (comparative). This data clearly establishes that the cable of Sample A (as per present invention) can be deployed faster.

While the preferred embodiments of the present disclosure have been described hereinabove, it may be appreciated that various changes, adaptations, and modifications may be made therein without departing from the spirit of the disclosure and the scope of the appended claims. It will be obvious to a person skilled in the art that the present disclosure may be embodied in other specific forms without departing from its spirit or essential characteristics. The described embodiments may be considered in all respects only as illustrative and not restrictive.

### ADVANTAGES OF THE PRESENT INVENTION

The present invention provides an optical fiber cable with superior blowing efficiency as compared to conventional cables and/or cables, dimensions, and features of which fall outside the scope of the present invention. For instance, the optical fiber cable of the present invention can be blown comparable distances as a conventional cable, however at significantly higher feed rate/speed, thus allowing for faster/ quicker deployment, which is more cost effective. Even at lower feed rate, the drop in blowing distance is much less as compared to conventional cables, which establishes that the optical fiber cable of the present invention is more robust and does not how deterioration in blowing performance at lower feed rate. Consequently, the optical fiber cable of the present invention will sustain less abrasion/ damage due to blowing during installation and yet achieve good blowing distance.

### LIST OF REFERENCE NUMERALS

- 100: Optical Fiber Cable
- 102: Core
- 104: Optical Fibers
- 106: Outer Sheath
- 108: Segments
- 108-1: First Segment
- 108-2: Second Segment
- 110: Protruding Elements
- 110-1: First Protruding Element
- 112: Strength Members
- 114: Module
- 116: Inner Layer
- wₚₑ: Width of Protruding Element
- wₛ: Width of Segment
- hₚₑ: Height of Protruding Element

## Claims

1. An optical fiber cable (100) comprising:
- a core (102) comprising a plurality of optical fibers (104); and
- at least a layer surrounding the core (102), said layer comprising an outer sheath (106), wherein the outer sheath (106) surface comprises a plurality of segments (108),
**characterized in that**
the outer sheath (106) comprises a plurality of protruding elements (110), wherein at least a protruding element (110-1) is located between adjacent segments (108-1, 108-2), and wherein the width (wₚₑ) of each of the plurality of protruding elements (110) is in a range of 4% to 20% of the width (wₛ) of a segment (108).

2. The optical fiber cable (100) as claimed in claim 1, wherein the cross-sectional profile of the plurality of segments (108) is selected from the group consisting of convex, concave, and flat.

3. The optical fiber cable (100) as claimed in claim 1 or 2, wherein the cross-sectional profile of the plurality of protruding elements (110) is selected from the group consisting of semi-circle, oval, Reuleaux polygon, and polygon with rounded corners.

4. The optical fiber cable (100) as claimed in any of claims 1 to 3, wherein the outer surface of said outer sheath (106) comprises 6 to 16 segments (108).

5. The optical fiber cable (100) as claimed in any of claims 1 to 4, comprising one or more strength members (112) embedded in the outer sheath (106), wherein where the optical fiber cable (100) comprises 2 strength members (112), the strength members are not diametrically opposite each other; and where the optical fiber cable (100) comprises 3 or more strength members (112), the 3 or more strength members (112) are placed equidistant from each other, and no two strength members (112) are diametrically opposite to each other.

6. The optical fiber cable (100) as claimed in claim 5, wherein the number of strength members (112) embedded in the outer sheath (106) is less than or equal to the number of segments (108).

7. The optical fiber cable (100) as claimed in any of claims 1 to 6, wherein the core (102) comprises at least one subunit comprising a plurality of intermittently bonded ribbons (IBRs).

8. The optical fiber cable (100) as claimed in any of claims 1 to 7, wherein the material for the segments (108) and the protruding elements (110) is identical.
